# EUROPÄISCHE PATENTSCHRIFT

(11) **EP 1 247 401 B1**
(45) Veröffentlichungstag und Bekanntmachung des Hinweises auf die Patenterteilung: **02.07.2003**
(21) Anmeldenummer: 99960758.3
(22) Anmeldetag: 30.12.1999
(51) Int. Cl.: H04N 7/173, H04N 7/24

(54) **VERFAHREN FÜR DIE ÜBERMITTLUNG VON BILDDATEN**
IMAGE DATA TRANSMISSION METHOD
PROCEDE DE TRANSMISSION DE DONNEES-IMAGE

(43) Veröffentlichungstag der Anmeldung: 09.10.2002
(73) Patentinhaber: Swisscom Mobile AG, 3050 Bern (CH)
(72) Erfinder: RITTER, Rudolf, CH-3052 Zollikofen (CH); LAUPER, Eric, CH-3014 Bern (CH)
(74) Vertreter: Saam, Christophe
(86) Internationale Anmeldenummer: CH9900632
(87) Internationale Veröffentlichungsnummer: WO01050754

(56) Entgegenhaltungen:
- WO-A-97/30551
- WO-A-99/52613
- US-A- 5 103 306
- REEVES T H ET AL: "ADAPTIVE FOVEATION OF MPEG VIDEO" PROCEEDINGS OF ACM MULTIMEDIA,US,NEW YORK, ACM, 18. November 1996 (1996-11-18), Seiten 231-241, XP000734723 ISBN: 0-89791-871-1
- KHANSARI M ET AL: "LOW BIT-RATE VIDEO TRANSMISSION OVER FADING CHANNELS FOR WIRELESS MICROCELLULAR SYSTEMS" IEEE TRANSACTIONS ON CIRCUITS AND SYSTEMS FOR VIDEO TECHNOLOGY,US,IEEE INC. NEW YORK, Bd. 6, Nr. 1, 1. Februar 1996 (1996-02-01), Seiten 1-11, XP000625574 ISSN: 1051-8215

## Beschreibung

Die vorliegende Erfindung betrifft ein Verfahren für die Übermittlung von Bilddaten sowie dafür geeignete Vorrichtungen.

Bilddaten, insbesondere digitale Daten, die einem Benutzer mit geeigneten Wiedergabemitteln als Bilder dargestellt werden können, werden oft vor deren Übertragung komprimiert, um die Übertragungszeiten zu reduzieren, und vor oder während der Wiedergabe dekomprimiert. Verschiedene Standards für die Komprimierung und Dekomprimierung von Bilddaten, beispielsweise die verschiedenen MPEG-Standards (Moving Pictures Expert Group), wurden bereits beschrieben.

Die Patent veröffentlichung WO98/33315 (University of Texas) beschreibt ein anderes Bilddatenkomprimierungsverfahren, welches auf der physiologischen Eigenschaft der menschlichen Augen basiert, die eine maximale Auflösung nur in dem Bereich des Bildes benötigen, der auf die Fovea des Auges projiziert wird (Betrachtungsbereich). Randliche Bildbereiche können ohne feststellbaren Qualitätsverlust mit einer geringeren Auflösung wiedergegeben werden. Diese Patentanmeldung schlägt daher vor, den vom Benutzer betrachteten Bildbereich kontinuierlich zu ermitteln und nur für diesen Bildbereich die maximale Auflösung zu verwenden, während für die weiter entfernten Bereiche eine geringere Auflösung eingesetzt wird. Der betrachtete Bildbereich beträgt typischerweise nur ca. zwei Prozent des gesamten Bildes. Das auf diese Weise stark komprimierte Bild wird dann über einen Übertragungskanal zwischen zwei Rechnern übertragen.

Dieses Verfahren eignet sich insbesondere für die Übertragung von Bildern, die für die Darstellung auf einer kleinen Anzeige bestimmt sind, beispielsweise auf dem Bildschirm eines Bürorechners. Wenn sich der Betrachtungspunkt rasch bewegen kann, beispielsweise bei sehr breiten Bildformaten oder bei ruckartigen Bewegungen der Pupille, kann es jedoch passieren, dass die Reaktionszeit des Systems zu langsam ist, so dass sich plötzlich Bildbereiche mit schlechter Auflösung im Mittelpunkt des betrachteten Bereichs befinden können. Ausserdem eignet sich dieses Verfahren nicht für die gleichzeitige Aussendung von Bilddaten an eine Vielzahl von Benutzern.

US-A-5,103,306 beschreibt eine Vorrichtung, sowie eine Methode zur Kompression von Bewegtbilddaten, die von einer Bildaufnahme- und Kodiervorrichtung über einen Kommunikationskanal zum Betrachter übertragen werden. Die Bilddaten, die vom Betrachter fokussiert werden und somit durch de Fovea der Retina des menschlichen Auges wahrgenommen werden, werden mit einer höheren Auflösung gegenüber den restlichen Bildbereichen übermittelt. Der fokussierte Bereich des Betrachters wird durch die Verfolgung seiner Augenbewegungen ermittelt.

XP-000734723 ('Adaptive Foveation of MPEG Video', Proceedings of ACM Multimedia, New York, U.S., 18 November 1996, Seiten 231-241, ISBN:0-89791-871-1) offenbart eine Verwendung der in US-A-5,103,306 beschriebenen Methode. Mehrere Nutzer empfangen komprimierte Videodaten Ober separate Zweiweg-Kommunikationskanäle, wobei die Videodaten in gewissen Bereichen Daten höherer Auflösung beinhalten. Diese Bereiche sind individuell auf die Nutzer abgestimmt und entsprechen dem jeweils durch den Benutzer fokussierten (fovealen) Bereich. Der foveale Bereich wird durch Augenbewegungsverfolgung oder mittels eines Zeigegeräts festgelegt und über die Rückkanäle an den Knotenpunkt übermittelt.

Es ist ein Ziel dieser Erfindung, ein neues und besseres Verfahren für die Komprimierung und Übertragung von Bildern vorzuschlagen, insbesondere ein Verfahren, bei welchem die oben angegebenen Nachteile vermieden werden können.

Gemäss der vorliegenden Erfindung wird dieses Ziel insbesondere durch die Elemente der unabhängigen Ansprüche erreicht. Weitere vorteilhafte Ausführungsformen gehen ausserdem aus den abhängigen Ansprüchen und der Beschreibung hervor.
Insbesondere werden diese Ziele mit einem Verfahren zur Übermittlung und Darstellung von Bilddaten erreicht, in welchem
- die benannten Bilddaten von einer Aussendevorrichtung an mindestens ein Kommunikationsendgerät übertragen und von Bildwiedergabemitteln im benannten mindestens einen Kommunikationsendgerät dargestellt werden, wobei die aktuelle Betrachtungsrichtung des Kommunikationsendgerät-Benutzers bestimmt wird,
- erste Bilddaten, die dem ganzen Bildbereich entsprechen, mit einer geringen Auflösung durch einen ersten Übertragungskanal übertragen werden,
- die benannte aktuelle Betrachtungsrichtung (22) durch einen Rückkanal an die benannte Aussendevorrichtung (1) gesendet wird,
- zweite Bilddaten, die dem vom Benutzer aktuell betrachteten Bildbereich entsprechen, mit einer höheren Auflösung durch einen zweiten Übertragungskanal übertragen werden, und
- die benannten ersten und zweiten Bilddaten überlagert und gleichzeitig wiedergegeben werden.

Dies hat den Vorteil, dass die ersten Bilddaten durch einen ersten Übertragungskanal (beispielsweise einen Broadcastkanal) übertragen werden, während nur die zweiten Bilddaten, die dem aktuell betrachteten Bildbereich entsprechen, durch einen zweiten Übertragungskanal (beispielsweise ein kostspieliges bidirektionales Mobilfunknetz) übertragen. werden. Damit kann für die Randbereiche eine höhere Auflösung als in der erwähnten Patent veröffentlichung WO98/33315 verwendet werden, ohne dass die Datenmenge die durch das kostenpflichtige Mobilfunknetz übertragen wird, erhöht wird.

Durch den Broadcastkanal können somit gleiche Bilddaten mit einer niedrigen Auflösung an alle Benutzer gesendet werden, während Bilddaten, die dem vom einzelnen Benutzer betrachteten Bildbereich entsprechen, mit einer höheren Auflösung durch den zweiten Übertragungskanal persönlich an jeden Benutzer gesendet werden.

Nachfolgend wird eine Ausführung der vorliegenden Erfindung anhand eines Beispieles beschrieben. Das Beispiel der Ausführung wird durch folgende beigelegte Figuren illustriert:
Figur 1 zeigt ein Blockschema des erfindungsgemässen Systems.
Figur 2 zeigt schematisch die Segmentierung des Bitmaps.

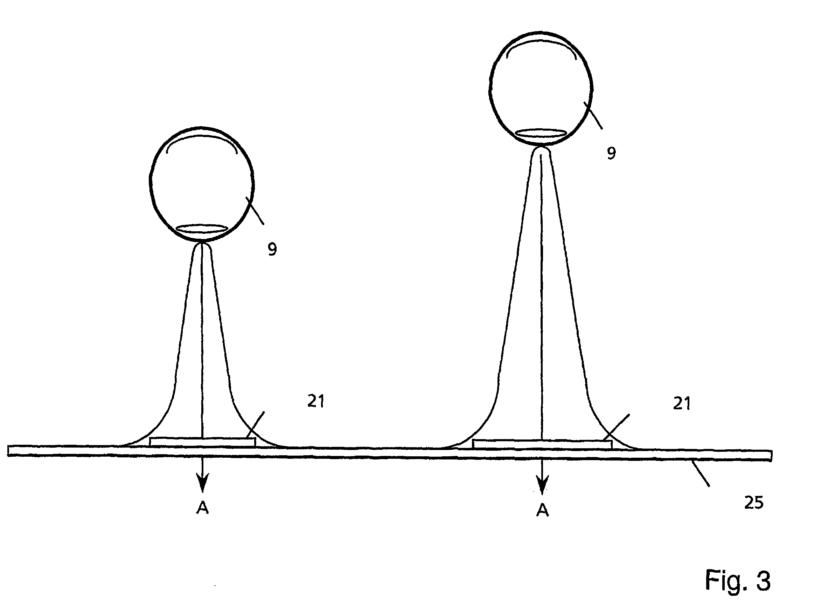

Figur 3 zeigt den durch die Augenphysiologie bedingten Auflösungsbedarf beim Betrachten von Bilddaten durch mehrere Benutzer.

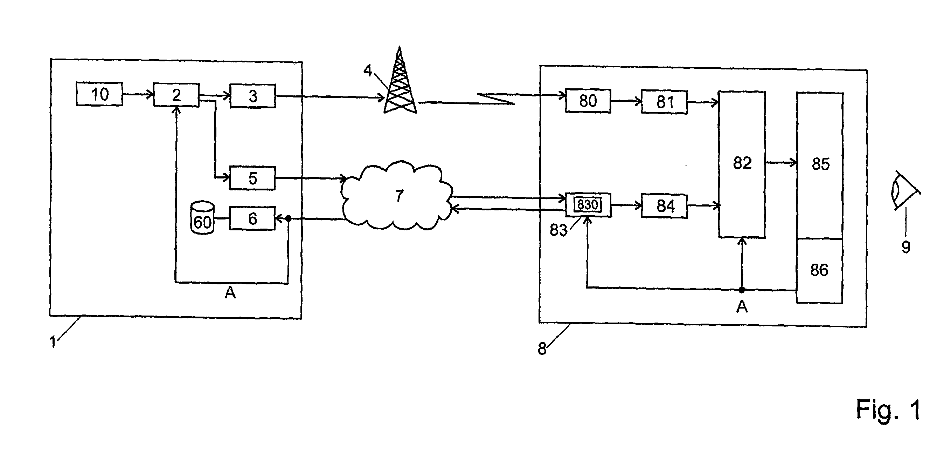

In der Figur 1 bezieht sich das Bezugszeichen 1 auf eine Aussendevorrichtung, die beispielsweise aus einem handelsüblichen Kommunikations-Server bestehen kann, der über Hard- und Softwarekomponenten verfügt, um über zwei verschiedene Übertragungskanäle 4, 7 mit einer Vielzahl von Kommunikationsendgeräten 8 zu kommunizieren. Das Bezugszeichen 10 bezieht sich auf Bilddaten, zum Beispiel auf digitale Datenfiles, deren Inhalt mit geeigneten Wiedergabemitteln einem Benutzer 9 als Bilder, beispielsweise als statische oder vorzugsweise animierte Bilder, dargestellt werden kann. Die Bilddaten können beispielsweise einer digitalisierten Bildsequenz entsprechen (beispielsweise ein Spielfilm oder eine Fernsehsendung), oder anderen Multimedia-Daten, beispielsweise HTML-Daten, die feste und/oder animierte Bilddaten und/oder Tondaten enthalten. In einer Variante der Erfindung werden die Bilddaten 10 im besonders interessanten Bildbereich und Bildausschnitte, auf welche Betrachter mit hoher Wahrscheinlichkeit den Blick richten, speziell markiert wie später erläutert.

Die Sequenz von Bilddaten wird durch einen nicht dargestellten Sequenzer in der Aussendevorrichtung 1 sequentiell gelesen, wobei die Sequenz optional vom Benutzer 9 gesteuert werden kann, beispielsweise im Falle von Bilddaten mit Hypertext-Steuerelementen. Der Sequenzer kann beispielsweise aus einem Hardware und/oder Software Modul bestehen, das die Bilder der Bildsequenz liest und an ein (optionales) Segmentierungsmodul 2 weiterleitet.

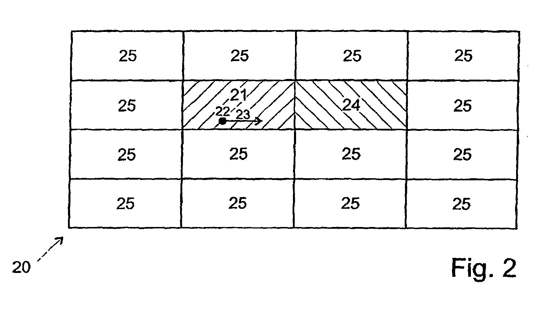

Das Segmentierungsmodul 2 teilt das Bild in verschiedene Segmente auf, wie auf der Figur 2 dargestellt Dazu verwendet es Angaben A über die aktuelle Betrachtungsrichtung der einzelnen Betrachter 9, beispielsweise die Koordinaten x,y aller Punkte 22, auf welche die Blickrichtung von mindestens einem Benutzer 9 aktuell gerichtet ist. Vorzugsweise werden ausserdem ein oder mehrere Verschiebungsvektoren 23, welche der Geschwindigkeit der aktuell betrachteten Punkte 22 entsprechen, empfangen oder im Segmentierungsmodul ermittel.

Das Segmentierungsmodul 2 bestimmt anhand dieser Angabe A den oder die Bereiche 21, die aktuell von mindestens einem Benutzer 9 betrachtet werden Wie später erläutert, werden diese Bereiche mit einer höheren Auflösung komprimiert und an den entsprechenden Benutzer über den Übertragungskanal 7 übertragen. Das gesamte Bild, einschliesslich der Randbereiche 25, wird mit einem anderen Algorithmus und mit einer geringeren Auflösung komprimiert und an alle Benutzer über den Übertragungskanal 4 ausgesendet. Die Grösse jedes Bereichs 21 kann vorzugsweise an die Bandbreite des Übertragungskanals 7 angepasst werden. Typischerweise wird die Grösse jedes hochkomprimierten Bereiches 21 ca. 2 bis 4 Prozent des gesamten Bildes entsprechen.

In einer bevorzugten Variante versucht ausserdem das Segmentierungsmodul 2 einen oder mehrere Betrachtcingsbereiche 24 im voraus zu bestimmen. Zu diesem Zweck kann das Segmentierungsmodul beispielsweise die mit dem Verschiebungsvektor 23 angegebenen Blickbewegungen, die Bewegung des betrachteten Objekts oder der Person auf dem Bild und/oder speziell markierte Abschnitte in den Bilddaten, beispielsweise Hyperlinks im Falle von multimedialen Bilddaten, berücksichtigen. Das Segmentierungsmodul 2 kann beispielsweise nacheinanderfolgende Positionen der Augen und/oder des betrachteten Objekts auf dem Bild speichern und die nächste zu erwartende Betrachtungsrichtung beispielsweise mittels geeigneten Regressionsfunktionen vorausbestimmen, wobei bestimmte oft betrachtete Bereiche manuell markiert werden können.

In der auf der Figur 2 dargestellten Variante sind die verschiedenen Bildbereiche 21, 24, 25 rechteckig. Sie könnten jedoch auch eine andere Form und unterschiedliche Grössen haben und sich teilweise oder ganz überlappen.

Die sich entfernt vom Betrachtungspunkt befindenden Bildbereiche 25 werden an ein erstes Kodierungsmodul 3 gesendet, wo sie beispielsweise mit einem MPEG-Algorithmus oder im Fall von statischen Bildern mit einem JPEG- oder GIF Algorithmus komprimiert werden. Das erste Kodierungsmodul 3 verwendet vorzugsweise räumliche, zeitliche und Chrominanz-Komprimierungsverfahren. Ausserdem führt das erste Kodierungsmodul vorzugsweise eine Fehlerkodierung und eine Kanalkodierung durch.

Die vom Kodierungsmodul 3 kodierten Bildbereiche werden dann von einem Sender 4 im Broadcast-Modus ausgesendet und können somit von einer Vielzahl von Empfängern 8 mittels einzelnen Broadcast-Empfängern 80 empfangen werden. Der Sender 4 kann beispielsweise die Daten als DAB oder DVB (Digital Audio Broadcasting bzw. Digital Video Broadcasting)-Bilddaten, als Fernsehdaten, beispielsweise digital kodierte Fernsehdaten, oder als TCP-IP-Daten über das Internet, usw., aussenden. Die vom Kodierungsmodul 3 vorbereiteten Daten können sogar auf magnetische und/ oder optische Datenträger kopiert werden, beispielsweise auf CD oder auf DVD, und auf diese Weise vertrieben und von einer Vielzahl von Benutzern käuflich erworben werden.

Die vom ersten Empfänger 80 im Kommunikationsendgerät 8 empfangenen Bilddaten werden in einen ersten Cachespeicher 81 kopiert, wobei vorzugsweise Bildbereiche 25 aus mehreren aufeinanderfolgenden Einzelbildern gespeichert werden. Auf diese Weise können variable Übertragungszeiten durch die beiden Übertragungskanäle 4 und 7 ausgeglichen werden.

Die vom Segmentierungsmodul selektierten Daten aus den aktuell und künftig betrachteten Bildbereichen 21 und 24 werden an ein zweites Kodierungsmodul 5 geleitet, das jeden aktuell oder künftig betrachteten Bereich 21, 24 mit einer fovealen Komprimierungsfunktion komprimiert, das heisst mit einer Funktion, die als Ergebnis Bilddaten mit einer höheren Auflösung im Nahbereich des betrachteten Punktes 22 als in den weiter entfernten Bildbereichen liefert, wie dies in der oben angegebenen Patent veröffentlichung WO98/33315 beschrieben ist.In einer bevorzugten Variante der Erfindung können mindestens gewisse Parameter der fovealen Funktion von der Bandbreite des zweiten Übertragungskanals abhängig sein. Ausserdem führt das zweite Kodierungsmodul 5 vorzugsweise eine Fehlerkodierung und eine Kanalkodierung durch.

Jeder vom zweiten Kodierungsmodul 5 kodierte Bildbereich 21 wird durch einen zweiten Übertragungskanal 7 an alle Benutzer 9 gesendet, die gerade diesen Bildbereich betrachten, und können somit von diesen Benutzern mittels zweiten Empfängern 83 (beispielsweise Mobilfunkendgeräten) in Kommunikationsendgeräten 8 empfangen werden. Der zweite Übertragungskanal 7 ist ein bidirektionaler Kommunikationskanal, welcher nahezu Echtzeitverbindungen erlaubt, beispielsweise ein öffentliches geschaltetes Telefonnetz, beispielsweise ein digitales Mobilfunknetz, beispielsweise gemäss GSM oder UMTS, oder ein Fixnetz, beispielsweise gemäss ISDN, oder ein TCP-IP Netz, beispielsweise Internet.

In einer nicht dargestellten Variante der Erfindung wird auf das Segmentierungsmodul 2 verzichtet und die gesamten einzelnen Bilder 10 werden an die beiden Kodierungsmodule 3 und 5 geleitet. Das erste Kodierungsmodul 3 kann in diesem Fall ein standardisiertes Modul sein, das alle Bereiche 21, 24 und 25 aller einzelnen Bilder komprimiert. Das zweite Kodierungsmodul 5 kann nach einer fovealen Funktion die gesamten Bilder komprimieren.

Die Kommunikationsendgeräte 8 sind vorzugsweise persönlich tragbar, elektrisch autonom und werden vorzugsweise als Taschengerät hergestellt. In der Ausführungsvariante, in der das Telekommunikationsnetz 7 ein Mobilfunknetz ist, sind mindestens gewisse der Kommunikationsendgeräte 8 Mobilfunkgeräte, beispielsweise Mobilfunktelefone oder kommunikationsfähige Laptop oder Palmtop Computer, die auch einen Broadcast-Empfänger 80 beinhalten. Solche kombinierte Kommunikationsendgeräte wurden beispielsweise in den Patent veröffentlichung WO99/60712 und WO99/60713 (beide im Namen der Swisscom AG) bereits beschrieben. Das Mobilfunkendgerät 83 kann beispielsweise unter Zuhilfenahme von GPRS-Diensten (Generalized Packet Radio Service), oder gemäss einem geeigneten Protokoll im Nutzkanal, Daten über das Mobilfunknetz 7 austauschen. Der erste Empfänger 80, beispielsweise ein DVB-Empfänger, und der zweite Empfänger 83, beispielsweise ein UMTS-Endgerät, sind vorzugsweise in einer einzigen Einheit (beispielsweise in einem, einzigen Gehäuse) kombiniert, können aber als Variante auch in mehreren miteinander verbundene Einheiten integriert werden. Im letzten Fall können die beiden Einheiten vorzugsweise über eine kontaktlose Schnittstelle, beispielsweise gemäss IrdA, BlueTooth oder HomeRF, verbunden werden.

Die vom zweiten Empfänger 83 im Kommunikationsendgerät 8 empfangenen Bilddaten werden in einen zweiten Cachespeicher 84 kopiert, wobei vorzugsweise mehrere aufeinanderfolgende Bildbereiche 21 bzw. 24 im zweiten Cachespeicher 84 gespeichert werden.

Ein Überlagerungsmodul 82 im Kommunikationsendgerät 8 liest. die Bilddaten in den beiden Cachespeichern 81 und 84 und überblendet sie. Zu diesem Zweck trägt vorzugsweise jeder Bildbereich 21, 24, 25 in den beiden Cachespeichern eine Nummer, die angibt, zu welchem Einzelbild er gehört, damit unterschiedliche Übertragungszeiten durch die beiden Übertragungskanäle 4 und 7 ausgeglichen werden können. Der vom Modul 82 selektierte Bildbereich 21, 24 im zweiten Cachespeicher 84 wird abhängig vom aktuell betrachteten Bildbereich ausgewählt. Ist der Cachespeicher gross genug, kann er auch verwendet werden, um das Lesen der gespeicherten Bilddaten durch entsprechende Benutzerbefehle zu pausieren, wiederzustarten, und/oder rückwärts und vorwärts zu spulen.

Die Bildsignale, die den vom Modul 82 gemischten Bilddaten entsprechen, können dann durch eine Anzeigevorrichtung 85 des Kommunikationsendgerätes 8 wiedergegeben werden. In einer bevorzugten Variante der Erfindung besteht die Anzeigevorrichtung aus einer sogenannten Virtuellen Retinalen Anzeigevorrichtung (VRD), die die Bildsignale auf die Retina des Auges des Benutzers 9 des Kommunikationsendgeräts 8 projiziert. Solche VRD-Anzeigevorrichtungen wurden in den Patent veröffentlichungen WO 94/09472 und WO 97/37339 beschrieben. Über eine passende Schnittstelle kann die Anzeigevorrichtung 85 mit Bilddaten in verschiedenen Formaten versorgt werden.

Die Anzeigevorrichtung 85 und die weiteren Komponenten des Kommunikationsendgeräts 8 können in gemeinsame oder separate Einheiten implementiert werden, wobei die Anzeigevorrichtung 85 in einer ersten Einheit beispielsweise über eine drahtgebundene oder über eine drahtlose Schnittstelle mit Komponenten der zweiten Einheit verbunden werden kann.

Wie in der Figur 1 schematisch dargestellt, umfasst das Kommunikationsendgerät 8 ein Betrachtungsrichtungsmessmodul 86, welches die Betrachtungsrichtung x, y des Benutzers 9 bestimmen kann. Ein solches Betrachtungsrichtungsmessmodul (Eye Tracking System ETS) wurde ebenfalls in der oben erwähnten Patent veröffentlichung WO 94/09472 beschrieben. Die Angabe A über die Betrachtungsrichtung x, y wird an das Modul 82 geleitet, weiches damit wie schon erwähnt bestimmen kann, welcher Bildbereich 21, 24 aus dem zweiten Cachespeicher 84 gelesen werden soll. Anschliessend wird diese Angabe A an den Sender-Empfänger 83 geleitet, durch ein nicht dargestelltes Modul mit benutzerspezifischen Angaben verknüpft und in Echtzeit vom Sender-Empfänger 83 über den Rückkanal des zweiten Übertragungskanals 7 an die Aussendevorrichtung 1 weitergeleitet. Je nach Art des zweiten Übertragungskanals können diese Angaben A beispielsweise als USSD-Meldung oder vorzugsweise über den Nutz- oder Datenkanal übertragen werden.

In einer Ausführungsvariante wird die Betrachtungsrichtung vorzugsweise mittels eines an einer Brille montierten Messmoduls gegenüber dem ßenutzerkopf gemessen, in dem vorzugsweise die Position der Pupille von mindestens einem Auge gemessen wird.

In einer anderen Ausführungsvariante wird die Betrachtungsrichtung vorzugsweise mittels eines an einer Brille montierten Messmoduls gegenüber demßenutzerkopf gemessen und die Position und/oder die Orientierung des Kopfes des Benutzers 9 gegenüber einer Referenzwelt mittels eines Messsystems, vorzugsweise ein auf den Benutzerkopf montiertes innertielles System, gemessen. So können dem Benutzer 9 Bilddaten projiziert werden, die grösser als sein gesamter Blickwinkel sind und deren Inhalt sich bewegt, wenn der Benutzer den Kopf dreht. Somit wird die aktuell betrachtungsrichtung 22 mit dem gültigen betrachteten Bereich 21 verbunden. Mit diesem Verfahren können einem Benutzer sehr weitwinklige Filme dargestellt werden.

Die benannten zusätzlichen Benutzerspezifischen Angaben, die ähnlich wie die Betrachtungsrichtung A zurückgesendet werden, umfassen vorzugsweise eine Benutzeridentifizierung, die beispielsweise in einem persönlichen Identifizierungsmodul 830 (beispielsweise einer SIM-Karte). abgelegt sind. Ausserdem können diese zusätzlichen Angaben andere Befehle vom Benutzer 9 enthalten (beispielsweise einen vom Benutzer selektierten URL, falls das dargestellte Bild Hyperlinks enthält) oder andere Selektionen in Menus. Diese zusätzlichen Angaben können zusammen oder getrennt übertragen werden. Mindestens gewisse zusätzliche Angaben können verschlüsselt und/oder elektronisch signiert werden.

In der Aussendevorrichtung 1 wird die empfangene Angabe A über den aktuell betrachteten Punkt x, y vom Segmentierungsmodul 2 dazu verwendet, den aktuell betrachteten Bildbereich 21 zu bestimmen und gegebenenfalls um den künftigen Bildbereich 24 vorauszubestimmen und um diese Bildbereiche 21, 24 zum Kodierungsmodul 5 zu leiten.

Die als zusätzliche Angabe übermittelte Benutzeridentifizierung kann von einem aussenderseitigen Verrechnungszentrum 6 verwendet werden, welches das Betrachten der Bilddaten verrechnen kann. Der verrechnete Betrag kann beispielsweise direkt einem auf dem Identifizierungsmodul 830 gespeicherten vorausbezahlten Geldbetrag, einem Bankkonto, einer Kreditkarte oder durch Rechnungsstellung (beispielsweise als Teil der Telefonrethnung) belastet werden und dabei beispielsweise pro Zeiteinheit der bezogenen Bilddaten, per bezogenem Titel, per zusätzlichen Angaben oder Seiten, und/oder in Kombination mit einem Abonnement verrechnet werden. Benutzerspezifische Einstellungen für die Rechnung (beispielsweise die bevorzugte Rechnungsadresse und Rechnungsart) können im Verrechnungszentrum in einer Benutzerdatenbank 80 abgelegt werden. Das Verrechnungszentrum kann in die Aussendevorrichtung 1 integriert werden, oder als Variante von einem anderen Institut (beispielsweise vom Betreiber des Netzes 7) verwaltet werden.

Auswahlbefehle und Instruktionen, die vom Benutzer 9 des Kommunikationsendgeräts 8 eingegeben und als zusätzliche Angaben über den zweiten Übertragungskanal 7 übermittelt werden, werden vom benannten nicht dargestellten Sequenzer entgegengenommen und weiterverarbeitet, so dass beispielsweise vom Benutzer angeforderte Bilddaten, beispielsweis Untertitel, HTML oder WML-Seiten, Tonsequenzen, usw., bezogen und über die beiden Übertragungskanäle an das Kommunikationsendgerät 4 übertragen werden.

Diese Erfindung eignet sich insbesondere für die gleichzeitige Übertragung von Bilddaten 1 (beispielsweise Spielfilme oder Femsehsendungen) an eine Vielzahl von Benutzern 9, wobei gemeinsame Daten durch einen Broadcastkanal 4 ausgesendet werden während Daten, die von der persönlichen Betrachtungsrichtung abhängig sind, durch einen adressierten Kanal 7 übertragen werden. Sie kann jedoch auch für Videokonferenzen oder für die Telefonie mit Bildübertragung zwischen zwei Partnern eingesetzt werden. Somit wird die Übertragung der Bilddaten mit Rücksicht auf den durch die Augenphysioiogie bedingten Auflösungsbedarf im Rahmen einer vordefinierten, maximalen Bandbreite der Kommunikationskanäle 4 und 7 angepasst.

Obwohl diese Erfindung in mehreren Details den speziellen Fall der Ausführung in einem GSM-Mobilfunknetz beschreibt, wird der Fachmann verstehen, dass dieses Verfahren auch mit anderen Typen von mobilen und Fix-Netzen, beispielsweise mit AMPS, TDMA, CDMA, TACS, PDC, HSCSD, GPRS, EDGE oder UMTS-Mobilfunknetzen, eingesetzt werden kann, insbesondere mit WAP- (Wireless Application Protocol) fähigen Mobilfunknetzen. Diese Erfindung kann ausserdem in anderen Netzen, insbesondere im Internet, verwendet werden.

## Patentansprüche

1. Verfahren zur Übermittlung und Darstellung von Bilddaten (20), in welchem die benannten Bilddaten von einer Aussendevorrichtung (1) an mindestens ein Kommunikationsendgerät (8) übertragen und von Bildwiedergabemitteln (85) dargestellt werden; wobei die aktuelle Betrachtungsrichtung des Kommunikationsendgerät-Benutzers (9) bestimmt wird,
**dadurch gekennzeichnet, dass** erste Bilddaten (25) mit einer geringen Auflösung durch einen ersten Übertragungskanal übertragen werden,
dass die benannte aktuelle Betrachtungsrichtung (22) durch einen Rückkanal an die benannte Aussendevorrichtung (1) gesendet wird,
dass zweite Bilddaten (21, 24), die den von dem benannten mindestens einen Benutzer aktuell oder künftig betrachteten Bildbereichen entsprechen, mit einer höheren Auflösung durch einen zweiten Übertragungskanal übertragen werden,
und dass die benannten ersten und zweiten Bilddaten im benannten Kommunikationsendgerät überlagert und gleichzeitig wiedergegeben werden.

2. Verfahren gemäss dem vorhergehenden Anspruch, **dadurch gekennzeichnet, dass** die benannten Bilddaten von den benannten Bildwiedergabemitteln (85) auf die Retina des benannten Benutzers (9) projiziert werden.

3. Verfahren gemäss dem vorhergehenden Anspruch, **dadurch gekennzeichnet, dass** der benannte betrachtete Bildbereich (21) der Bildbereich ist, der auf die Fovea der genannten Retina projiziert werden soll.

4. Verfahren gemäss einem der vorhergehenden Ansprüche, **dadurch gekennzeichnet, dass** die Grösse des benannten betrachteten Bildbereiches (21) angepasst wird.

5. Verfahren gemäss einem der vorhergehenden Ansprüche, **dadurch gekennzeichnet, dass** die Grösse des benannten betrachteten Bildbereiches (21) an die Bandbreite des benannten zweiten Übertragungskanals (7) angepasst wird.

6. Verfahren gemäss einem der vorhergehenden Ansprüche, **dadurch gekennzeichnet, dass** die benannten ersten Bilddaten (25) im Broadcast-Modus durch den benannten ersten Übertragungskanal (4) übertragen werden.

7. Verfahren gemäss dem vorhergehenden Anspruch, **dadurch gekennzeichnet, dass** die benannten ersten Bilddaten (25) als DVB-Daten übertragen werden.

8. Verfahren gemäss einem der Ansprüche 1 bis 4, **dadurch gekennzeichnet, dass** die benannten ersten Bilddaten (25) auf magnetische und/oder optische Datenträger kopiert und vertrieben werden.

9. Verfahren gemäss einem der vorhergehenden Ansprüche, **dadurch gekennzeichnet, dass** Tondaten durch den benannten ersten Übertragungskanal (4) simultan zu den benannten ersten Bilddaten (25) übertragen werden und vom benannten Kommunikationsendgerät (8) wiedergegeben werden.

10. Verfahren gemäss einem der vorhergehenden Ansprüche, **dadurch gekennzeichnet, dass** der benannte zweite Übertragungskanal (7) bidirektional ist und dass der benannte Rückkanal der Rückkanal dieses benannten bidirektionalen zweiten Übertragungskanals (7) ist.

11. Verfahren gemäss dem vorhergehenden Anspruch, **dadurch gekennzeichnet, dass** der benannte zweite Übertragungskanal (7) ein öffentliches geschaltetes Telefonnetz umfasst.

12. Verfahren gemäss dem vorhergehenden Anspruch, **dadurch gekennzeichnet, dass** das benannte Telefonnetz ein Mobilfunknetz ist.

13. Verfahren gemäss einem der Ansprüche 1 bis 10, **dadurch gekennzeichnet, dass** der benannte zweite Übertragungskanal (7) ein TCP-IP Netz umfasst.

14. Verfahren gemäss einem der vorhergehenden Ansprüche, **dadurch gekennzeichnet, dass** Benutzeridentifizierungsdaten durch den benannten Rückkanal zu einem Verrechnungszentrum (6) gesendet werden und von diesem Verrechnungszentrum für die Verrechnung der dargestellten Bilder verwendet werden.

15. Verfahren gemäss einem der vorhergehenden Ansprüche, **dadurch gekennzeichnet, dass** zusätzliche vom benannten mindestens einem Benutzer angefragte Multimediadaten durch den benannten zweiten Übertragungskanal (7) gesendet werden.

16. Verfahren gemäss dem vorhergehenden Anspruch, **dadurch gekennzeichnet, dass** die benannten zusätzlichen Multimediadaten dem mit dem Auge selektierten Hyperlink im dargestellten Bild entsprechen.

17. Verfahren gemäss einem der vorhergehenden Ansprüche, **dadurch gekennzeichnet, dass** die benannte Betrachtungsrichtung (22) im voraus bestimmt wird.

18. Verfahren gemäss dem vorhergehenden Anspruch, **dadurch gekennzeichnet, dass** die benannte Betrachtungsrichtung unter Berücksichtigung der Bewegung des Betrachtungspunktes vorausbestimmt wird.

19. Verfahren gemäss dem Anspruch 17, **dadurch gekennzeichnet, dass** die benannte Betrachtungsrichtung unter Berücksichtigung der Bewegung des betrachteten Objekts auf den genannten Bilddaten vorausbestimmt wird.

20. Verfahren gemäss dem Anspruch 17, **dadurch gekennzeichnet, dass** die benannte Betrachtungsrichtung unter Berücksichtigung von markierten Bereichen im Bild vorausbestimmt wird.

21. Kommunikationsendgerät (8), welches Bilddaten empfängt und mit Bildwiedergabemitteln (85) darstellt, und welches die aktuelle Betrachtungsrichtung (22) des Kommunikationsendgerät-Benutzers (9) bestimmt **dadurch gekennzeichnet;**
**dass** es erste Bilddaten (25) mit einer geringen Auflösung durch einen ersten Übertragungskanal (4) empfängt,
**dass** es zweite Bilddaten (21, 24), die dem vom Benutzer aktuell und/oder künftig betrachteten Bildbereich entsprechen, mit einer höheren Auflösung durch einen zweiten Übertragungskanal (7) empfängt,
**dass** es die benannte Betrachtungsrichtung (22) durch einen Rückkanal sendet,
und **dass** es erste und zweite Bilddaten überlagert und gleichzeitig wiedergibt.

22. Kommunikationsendgerät gemäss dem vorhergehenden Ansprach, **dadurch gekennzeichnet, dass** die benannten Bilddaten von den benannten Bildwiedergabemitteln (85) auf die Retina des benannten Benutzers (9) projiziert werden.

23. Kommunikationsendgerät gemäss dem vorhergehenden Anspruch, **dadurch gekennzeichnet, dass** das benannte Bildwiedergabemittel (85) eine Virtuelle Retinale Anzeigevorrichtung ist, welche den benannten Bilddaten entsprechende Bildsignale auf die Retina des benannten Benutzers projiziert.

24. Kommunikationsendgerät gemäss einem der Ansprüche 21 bis 23, **dadurch gekennzeichnet, dass** die benannten Bildwiedergabemittel (85) in einer anderen Einheit als das Empfangsteil (80, 83) des benannten Kommunikationsendgeräts (8) integriert ist.

25. Kommunikationsendgerät gemäss dem vorhergehenden Anspruch, **dadurch gekennzeichnet, dass** die benannten Einheiten durch eine kontaktlose Schnittstelle im Nahbereich verbunden sind.

26. Kommunikationsendgerät gemäss dem Anspruch 22, **dadurch gekennzeichnet, dass** der benannte aktuell betrachtete Bildbereich dem Bildbereich, der auf die Fovea der genannten Retina projiziert werden soll, entspricht.

27. Kommunikationsendgerät gemäss dem vorhergehenden Anspruch, **dadurch gekennzeichnet, dass** die Grösse des benannten aktuell betrachteten Bildbereiches (21) angepasst wird.

28. Kommunikationsendgerät gemäss einem der Ansprüche 21 bis 27, **dadurch gekennzeichnet, dass** es einen ersten Empfänger (80) für im Broadcast-Modus durch den benannten ersten Übertragungskanal (4) übertragene Bilddaten umfasst.

29. Kommunikationsendgerät gemäss dem vorhergehenden Anspruch, **dadurch gekennzeichnet, dass** der benannte erste Empfänger (80) ein Funkempfänger ist.

30. Kommunikationsendgerät gemäss dem vorhergehenden Anspruch, **dadurch gekennzeichnet, dass** der benannte erste Empfänger (80) ein DVB-Funkempfänger ist.

31. Kommunikationsendgerät gemäss dem Anspruch 28, **dadurch gekennzeichnet, dass** der benannte erste Empfänger einen Datenträgerleser umfasst.

32. Kommunikationsendgerät gemäss einem der Ansprüche 21 bis 31, **dadurch gekennzeichnet, dass** es einen zweiten Empfänger (83) für durch den benannten zweiten Übertragungskanal (7) übertragene Bilddaten umfasst.

33. Kommunikationsendgerät gemäss dem vorhergehenden Anspruch, **dadurch gekennzeichnet, dass** der benannte zweite Empfänger (83) ein Sender-Empfänger ist, der die benannte Betrachtungsrichtung (22) durch den benannten Rückkanal (7) sendet.

34. Kommunikationsendgerät gemäss dem vorhergehenden Anspruch, **dadurch gekennzeichnet, dass** der benannte zweite Empfänger (83) ein Mobilfunkendgerät ist.

35. Kommunikationsendgerät gemäss einem der Ansprüche 21 bis 34, **dadurch gekennzeichnet, dass** es die benannte Betrachtungsrichtung (x, y) in Echtzeit durch den benannten zweiten Übertragungskanal (7) zur Aussendevorrichtung (1) sendet.

36. Kommunikationsendgerät gemäss einem der Ansprüche 21 bis 35, **dadurch gekennzeichnet, dass** es einen Cache-Speicher (84) für die benannten zweiten Bilddaten (21, 24) umfasst.

37. Kommunikationsendgerät gemäss dem vorhergehenden Anspruch, **dadurch gekennzeichnet, dass** der benannte Cache-Speicher (84) Bilddaten, die einem grösseren Bereich (21+24) als dem benannten aktuell betrachteten Bildbereich (21) entsprechen, und die Bilddaten, die aus dem benannten Cache-Speicher extrahiert werden, von der benannten aktuellen Betrachtungsrichtung (x, y) abhängig sind.

38. Kommunikationsendgerät gemäss einem der Ansprüche 36 bis 37, **dadurch gekennzeichnet, dass** es ausserdem einen ersten Cache-Speicher (81) für die benannten ersten Bilddaten (25) umfasst,
und dass die Daten aus dem benannten ersten und aus dem benannten zweiten Cache-Speicher synchron extrahiert werden.

39. Aussendevorrichtung, **dadurch gekennzeichnet, dass** sie folgende Komponenten umfasst:
einen Empfänger, um Daten, die die über einen Rückkanal übertragene Betrachtungsrichtung (22) von mindestens einem Benutzer (9) enthalten, zu empfangen,
ein erstes Kodierungsmodul (3), um erste Bilddaten (25) mit einer geringen Auflösung zu komprimieren und durch einen ersten Übertragungskanal (4) im Broadcast-Modus zu senden,
ein zweites Kodierungsmodul (5), um zweite Bilddaten (21, 24), die den vom benannten mindestens einen Benutzer aktuell oder künftig betrachteten Bildbereichen entsprechen, mit einer höheren Auflösung zu komprimieren und durch einen Zweiten Übertragungskanal (7) zu übertragen.

40. Vorrichtung gemäss dem vorhergehenden Anspruch, **dadurch gekennzeichnet, dass** der benannte betrachtete Bildbereich (21) der Bildbereich ist, der auf die Fovea der Retina des genannten Benutzers projiziert wird.

41. Vorrichtung gemäss dem vorhergehenden Anspruch, **dadurch gekennzeichnet, dass** die Grösse des benannten betrachteten Bildbereiches (21) angepasst wird.

42. Vorrichtung gemäss dem vorhergehenden Anspruch, **dadurch gekennzeichnet, dass** die Grösse des benannten betrachteten Bildbereiches (21) an die Bandbreite des benannten zweiten Übertragungskanals (7) angepasst wird.

43. Vorrichtung gemäss einem der Ansprüche 39 bis. 42, **dadurch gekennzeichnet, dass** die benannten ersten Bilddaten (25) im Broadcast-Modus durch den benannten ersten Übertragungskanal (4) übertragen werden.

44. Vorrichtung gemäss einem der Ansprüche 39 bis 43, **dadurch gekennzeichnet, dass** Tondaten durch den benannten ersten Übertragungskanal (4) simultan zu den benannten ersten Bilddaten (25) übertragen werden.

45. Vorrichtung gemäss einem der Ansprüche 39 bis 44, **dadurch gekennzeichnet, dass** der benannte zweite Übertragungskanal (7) bidirektional ist und dass der benannte Rückkanal der Rückkanal dieses zweiten Übertragungskanals (7) ist.

46. Vorrichtung gemäss dem vorhergehenden Anspruch, **dadurch gekennzeichnet, dass** der benannte zweite Übertragungskanal (7) ein öffentliches geschaltetes Telefonnetz umfasst.

47. Vorrichtung gemäss dem vorhergehenden Anspruch, **dadurch gekennzeichnet, dass** das benannte Telefonnetz ein Mobilfunknetz ist.

48. Vorrichtung gemäss einem der Ansprüche 39 bis 47, **dadurch gekennzeichnet, dass** ein Verrechnungszentrum (6) vorgesehen ist, um dem Benutzer (9) die Darstellung der Bilder zu verrechnen.

49. Vorrichtung gemäss einem der Ansprüche 39 bis 48, **dadurch gekennzeichnet, dass** sie ein Segmentierungsmodul (2) umfasst, um die Bildbereiche (21, 24, 25), die an das benannte erste beziehungsweise zweite Kodierungsmodul geleitet werden sollen, zu bestimmen.

50. Vorrichtung gemäss einem der Ansprüche 39 bis 49, **dadurch gekennzeichnet, dass** das benannte zweite Kodierungsmodul (5) Bilddaten, die mindestens einem Bildbereich entsprechen, der aktuell oder künftig. gleichzeitig von einer Vielzahl von Benutzern betrachtet wird, auf einmal kodiert und an die benannte Vielzahl von Benutzern sendet.

51. Vorrichtung gemäss einem der Ansprüche 39 bis 50, **dadurch gekennzeichnet, dass** die benannte Betrachtungsrichtung im voraus bestimmt wird.

52. Vorrichtung gemäss einem der Ansprüche 39 bis 51, **dadurch gekennzeichnet, dass** die benannte Betrachtungsrichtung unter Berücksichtigung der Bewegung des Betrachtungspunktes vorausbestimmt wird.

53. Vorrichtung gemäss einem der Ansprüche 39 bis 52, **dadurch gekennzeichnet, dass** die benannte Betrachtungsrichtung unter Berücksichtigung der Bewegung des betrachteten Objekts auf den genannten Bilddaten vorausbestimmt wird.

54. Vorrichtung gemäss einem der Ansprüche 39 bis 53, **dadurch gekennzeichnet, dass** die benannte Betrachtungsrichtung unter Berücksichtigung von markierten Bereichen im Bild vorausbestimmt wird.

## Claims

1. Method for the transmission and reproduction of image data (20) in which said image data are transmitted from a sending device (1) to at least one communication terminal (8) and reproduced by image reproducing means (85), wherein the current viewing direction of the communication terminal's user (9) is determined:
**characterized in that** first image data (25) are transmitted with a low resolution over a first transmission channel,
**in that** said current viewing direction (22) is sent over a back channel to said sending device (1),
**in that** second image data (21, 24) corresponding to the image areas viewed currently or in future by said at least one user are transmitted with a higher resolution over a second transmission channel (7),
and **in that** said first and second image data are superimposed and simultaneously reproduced in said communication terminal.

2. Method according to the preceding claim, **characterized in that** said image data are projected by said image reproducing means (85). onto the retina of said user (9).

3. Method according to the preceding claim, **characterized in that** said viewed image area (21) is the image area that is to be projected onto the fovea of said retina.

4. Method according to one of the preceding claims, **characterized in that** the size of said viewed image area (21) is adjusted.

5. Method according to one of the preceding claims, **characterized in that** the size of said viewed image area (21) is adapted to the bandwidth of said second transmission channel (7).

6. Method according to one of the preceding claims, **characterized in that** said first image data (25) are transmitted in broadcast mode over said first transmission channel (4).

7. Method according to the preceding claim, **characterized in that** said first image data (25) are transmitted as DVB data.

8. Method according to one of the claims 1 to 4, **characterized in that** said first image data (25) are copied and commercially distributed on magnetic and/or optical data carriers.

9. Method according to one of the preceding claims, **characterized in that** sound data are transmitted over the first transmission channel (4) simultaneously with said first image data (25) and reproduced by said communication terminal (8).

10. Method according to one of the preceding claims, **characterized in that** said second transmission channel (7) is bi-directional and **in that** said back channel is the back channel of this said bi-directional second transmission channel (7).

11. Method according to the preceding claim, **characterized in that** said second transmission channel (7) comprises a public switched telephone network.

12. Method according to the preceding claim, **characterized in that** said telephone network is a mobile radio network.

13. Method according to one of the claims 1 to 10, **characterized in that** said second transmission channel (7) comprises a TCP-IP network.

14. Method according to one of the preceding claims, **characterized in that** user identification data are sent over said back channel to a billing center (6) and are used by this billing center for billing the reproduced images.

15. Method according to one of the preceding claims, **characterized in that** additional multimedia data requested by said at least one user are sent over said second transmission channel (7).

16. Method according to the preceding claim, **characterized in that** said additional multimedia data correspond to the hyperlink selected with the eye in the reproduced image.

17. Method according to one of the preceding claims, **characterized in that** said viewing direction (22) is determined in advance.

18. Method according to the preceding claim, **characterized in that** said viewing direction is predetermined in consideration of the movement of the viewing point.

19. Method according to claim 17, **characterized in that** said viewing direction is predetermined in consideration of the movement of the viewed object on said image data.

20. Method according to claim 17, **characterized in that** said viewing direction is predetermined in consideration of marked areas in the image.

21. Communication terminal (8) that receives image data and reproduces them with image reproducing means (85) and that determines the current viewing direction (22) of the communication terminal's user (9), **characterized in that**
it can receive first image data (25) with a low resolution over a first transmission channel (4),
**in that** it can receive second image data (21, 24) corresponding to the image areas viewed currently or in future by the user with a higher resolution over a second transmission channel (7),
**in that** it sends said viewing direction (22) over a back channel,
and **in that** it superimposes and simultaneously reproduces first and second image data.

22. Communication terminal according to the preceding claim, **characterized in that** said image data are projected by said image reproducing means (85) onto the retina of said user (9).

23. Communication terminal according to the preceding claim, **characterized in that** said image reproducing means (85) is a Virtual Retinal Display that projects image signals corresponding to said image data onto the retina of said user.

24. Communication terminal according to one of the claims 21 to 23, **characterized in that** said image reproducing means (85) are integrated in a different unit from the receiving part (80, 83) of said communication terminal (8).

25. Communication terminal according to the preceding claim, **characterized in that** said units are connected over a contactless interface at close range.

26. Communication terminal according to claim 22, **characterized in that** said currently viewed image area corresponds to the image area that is to be projected onto the fovea of said retina.

27. Communication terminal according to the preceding claim, **characterized in that** the size of said currently viewed image area (21) is adjusted.

28. Communication terminal according to one of the claims 21 to 27, **characterized in that** it includes a first receiver (80) for image data transmitted in broadcast mode over said first transmission channel (4).

29. Communication terminal according to the preceding claim, **characterized in that** said first receiver (80) is a radio receiver.

30. Communication terminal according to the preceding claim, **characterized in that** said first receiver (80) is a DVB radio receiver.

31. Communication terminal according to claim 28, **characterized in that** said first receiver includes a data carrier reader.

32. Communication terminal according to one of the claims 21 to 31, **characterized in that** it includes a second receiver (83) for image data transmitted over said second transmission channel (7).

33. Communication terminal according to the preceding claim, **characterized in that** said second receiver (83) is a transceiver that sends said viewing direction (22) over said back channel (7).

34. Communication terminal according to the preceding claim, **characterized in that** said second receiver (83) is a mobile radio terminal.

35. Communication terminal according to one of the claims 21 to 34, **characterized in that** it sends said viewing direction (x, y) in real-time over said second transmission channel (7) to the sending device (1).

36. Communication terminal according to one of the claims 21 to 35, **characterized in that** it includes a cache memory (84) for said second image data (21, 24).

37. Communication terminal according to the preceding claim, **characterized in that** said cache memory (84) contains image data that correspond to a larger area (21+24) than the currently viewed image area (21) and **in that** the image data that are extracted from said cache memory depend on the current viewing direction (x, y).

38. Communication terminal according to one of the claims 36 to 37, **characterized in that** it further includes a first cache memory (81) for said first image data (25),
and **in that** the data from said first and from said second cache memories are extracted synchronically.

39. Sending device, **characterized in that** it includes the following components:
a receiver for receiving data comprising the viewing direction (22) of at least one user (9) transmitted over a back channel,
a first encoding module (3) for compressing first image data (25) with a low resolution and sending them over a first transmission channel (4) in broadcast mode,
a second encoding module (5) for compressing second image data (21, 24), corresponding to image areas viewed currently or in future by said at least one user, with a high resolution and sending them over a second transmission channel (7).

40. Device according to the preceding claim, **characterized in that** said viewed image area (21) is the image area that is projected onto the fovea of the retina of said user.

41. Device according to the preceding claim, **characterized in that** the size of said viewed image area (21) is adjusted.

42. Device according to the preceding claim, **characterized in that** the size of said viewed image area (21) is adapted to the bandwidth of said second transmission channel (7).

43. Device according to one of the claims 39 to 42, **characterized in that** said first image data (25) are transmitted in broadcast mode over said first transmission channel (4).

44. Device according to one of the claims 39 to 43, **characterized in that** sound data are transmitted over said first transmission channel (4) simultaneously with said first image data (25).

45. Device according to one of the claims 39 to 44, **characterized in that** said second transmission channel (7) is bi-directional and **in that** said back channel is the back channel of this second transmission channel (7).

46. Device according to the preceding claim, **characterized in that** said second transmission channel (7) includes a public switched telephone network.

47. Device according to the preceding claim, **characterized in that** said telephone network is a mobile radio network.

48. Device according to one of the claims 39 to 47, **characterized in that** a billing center (6) is provided in order to bill to the user (9) the reproduction of the images.

49. Device according to one of the claims 39 to 48, **characterized in that** it includes a segmentation module (2) in order to determine the image areas (21, 24, 25) that are to be forwarded to said first resp. second encoding module.

50. Device according to one of the claims 39 to 49, **characterized in that** said second encoding module (5) encodes all at once image data that correspond to at least one image area viewed simultaneously by a plurality of users currently or in future and sends them to said plurality of users.

51. Device according to one of the claims 39 to 50, **characterized in that** said viewing direction is determined in advance.

52. Device according to one of the claims 39 to 51, **characterized in that** said viewing direction is predetermined in consideration of the movement of the viewing point.

53. Device according to one of the claims 39 to 52, **characterized in that** said viewing direction is predetermined in consideration of the movement of the viewed object on said image data.

54. Device according to one of the claims 39 to 53, **characterized in that** said viewing direction is predetermined in consideration of marked areas in the image.

## Revendications

1. Méthode de transmission et de restitution de données visuelles (20) dans laquelle lesdites données d'image sont transmises d'un dispositif émetteur (1) vers au moins un terminal de communication (8) puis restituées par des moyens de restitution d'images (85), la direction momentanée du regard de l'utilisateur (9) du terminal de communication étant déterminée,
**caractérisée en ce que** des premières données d'image (25) sont transmises avec une résolution réduite à travers un premier canal de transmission,
**en ce que** ladite direction momentanée du regard (22) est transmise par un canal de retour audit dispositif émetteur (1),
**en ce que** des deuxièmes données d'image (21, 24) correspondant aux portions de l'image regardées actuellement ou ultérieurement par au moins un utilisateur sont transmises par un
deuxième canal de transmission,
et **en ce que** lesdites premières et deuxièmes données d'image sont superposées et restituées simultanément par ledit terminal de communication.

2. Méthode selon la revendication précédente, **caractérisée en ce que** lesdites données d'image sont projetées par lesdits moyens de restitution d'images (85) sur la rétine dudit utilisateur (9).

3. Méthode selon la revendication précédente, **caractérisée en ce que** ladite portion de l'image regardée (21) correspond à la portion d'image qui doit être projetée sur la fovéa de ladite rétine.

4. Méthode selon la revendication précédente, **caractérisée en ce que** la taille de ladite portion d'image regardée (21) est adaptée.

5. Méthode selon l'une des revendications précédentes, **caractérisée en ce que** la taille de ladite portion d'image regardée (21) est adaptée à la bande passante dudit deuxième canal de transmission (7).

6. Méthode selon l'une des revendications précédentes, **caractérisée en ce que** lesdites premières données d'image (25) sont transmises en mode broadcast à travers ledit premier canal de transmission (4).

7. Méthode selon la revendication précédente, **caractérisée en ce que** lesdites premières données d'image (25) sont transmises comme données DVB.

8. Méthode selon l'une des revendications 1 à 4, **caractérisée en ce que** lesdites premières données d'image (25) sont copiées et distribuées sur des supports magnétiques et/ou optiques.

9. Méthode selon l'une des revendications précédentes, **caractérisée en ce que** des données audio sont transmises à travers ledit premier canal de transmission (4) simultanément auxdites premières données d'image (25) et restituées par ledit terminal de communication (8).

10. Méthode selon l'une des revendications précédentes, **caractérisée en ce que** ledit deuxième canal de transmission (7) est bidirectionnel, et ce que ledit canal de retour est le canal de retour dudit deuxième canal de transmission bidirectionnel (7).

11. Méthode selon la revendication précédente, **caractérisée en ce que** ledit deuxième canal de transmission (7) comprend un réseau téléphonique public commuté.

12. Méthode selon la revendication précédente, **caractérisée en ce que** ledit réseau téléphonique est un réseau mobile.

13. Méthode selon une des revendications 1 à 10, **caractérisée en ce que** ledit deuxième canal de transmission (7) comprend un réseau TCP-IP.

14. Méthode selon l'une des revendications précédentes, **caractérisée en ce que** des données d'identification d'utilisateur sont envoyées par ledit canal de retour à un centre de facturation (6) et utilisées par ledit centre de facturation pour facturer les images restituées.

15. Méthode selon l'une des revendications précédentes, **caractérisée en ce que** des données multimédia supplémentaires requises par au moins un utilisateur sont envoyées par ledit deuxième canal de transmission (7).

16. Méthode selon la revendication précédente, **caractérisée en ce que** lesdites données multimédia supplémentaires correspondent au hyperlien sélectionné avec l'oeil dans l'image restituée.

17. Méthode selon l'une des revendications précédentes, **caractérisée en ce que** ladite direction du regard (22) est déterminée en avance.

18. Méthode selon la revendication précédente, **caractérisée en ce que** ladite direction du regard est prédéterminée en tenant compte du mouvement du point regardé.

19. Méthode selon la revendication 17, **caractérisée en ce que** ladite direction du regard est prédéterminée en tenant compte du mouvement de l'objet regardé sur lesdites données d'image.

20. Méthode selon la revendication 17, **caractérisée en ce que** ladite direction du regard est prédéterminée en tenant compte des portions marquées de l'image.

21. Terminal de communication (8) qui reçoit des données d'image et les restitue avec des moyens de restitution d'image (85), et qui détermine la direction du regard (22) momentanée de l'utilisateur du terminal de communication (9), **caractérisé en ce que**
il reçoit des premières données d'image (25) avec une résolution réduite à travers un premier canal de transmission (4),
il reçoit des deuxièmes données d'image (25), correspondant à la portion d'image actuellement ou ultérieurement regardée par l'utilisateur, avec une résolution plus élevée à travers un deuxième canal de transmission (7),
il envoie ladite direction du regard (22) à travers un canal de retour,
et il superpose et restitue simultanément les premières et deuxièmes données d'image.

22. Terminal de communication selon la revendication précédente, **caractérisé en ce que** lesdites données d'image sont projetées par lesdits moyens de restitution d'image (85) sur la rétine dudit utilisateur.

23. Terminal de communication selon la revendication précédente, **caractérisé en ce que** lesdits moyens de restitution d'image (85) constituent un dispositif d'affichage rétinal virtuel qui projette des données d'image correspondant auxdites données d'image sur la rétine dudit utilisateur.

24. Terminal de communication selon l'une des revendications 21 à 23, **caractérisé en ce que** lesdits moyens de restitution d'image (85) sont intégrés dans une autre unité que la partie réception (80, 83) dudit terminal de communication (8).

25. Terminal de communication selon la revendication 24, **caractérisé en ce que** lesdites unités sont reliées par une interface sans fil à courte distance.

26. Terminal de communication selon la revendication 22, **caractérisé en ce que** ladite portion de l'image regardée (21) correspond à la portion d'image qui doit être projetée sur la fovéa de ladite rétine.

27. Terminal de communication selon la revendication précédente, **caractérisée en ce que** la taille de ladite portion d'image regardée (21) est adaptée.

28. Terminal de communication selon l'une des revendications 21 à 27, **caractérisé en ce qu'**il comprend un premier récepteur (80) pour des données d'image transmises en mode broadcast à travers ledit premier canal de transmission (4).

29. Terminal de communication selon la revendication précédente, **caractérisé en ce que** ledit premier récepteur (80) est un récepteur à radiofréquence.

30. Terminal de communication selon la revendication précédente, **caractérisé en ce que** ledit premier récepteur (80) est un récepteur DVB.

31. Terminal de communication selon la revendication 28, **caractérisé en ce que** ledit premier récepteur comprend un lecteur de support de données.

32. Terminal de communication selon l'une des revendications 21 à 31, **caractérisé en ce qu'**il comprend un deuxième récepteur (83) pour des données d'image transmises à travers ledit deuxième canal de transmission (7).

33. Terminal de communication selon la revendication précédente, **caractérisé en ce que** ledit deuxième récepteur (83) est un émetteur-récepteur qui envoie ladite direction de regard (22) à travers ledit canal de retour (7).

34. Terminal de communication selon la revendication précédente, **caractérisé en ce que** ledit deuxième récepteur (83) est un terminal radiomobile.

35. Terminal de communication selon l'une des revendications 21 à 34, **caractérisé en ce que** ladite direction du regard (x, y) est transmise en temps réel au dispositif émetteur (1) à travers ledit deuxième canal de transmission (7).

36. Terminal de communication selon l'une des revendications 21 à 35, **caractérisé en ce qu'**il comprend une mémoire cache (84) pour lesdites deuxièmes données d'image (21, 24).

37. Terminal de communication selon la revendication précédente, **caractérisé en ce que** ladite mémoire cache (84) contient des données d'image qui correspondent à une portion d'image (21+24) plus grande que la portion d'image actuellement regardée, et **en ce que** les données d'image qui sont extraites de ladite mémoire cache dépendent de ladite direction du regard (x, y).

38. Terminal de communication selon l'une des revendications 36 à 37, **caractérisé en ce qu'**il comporte en outre une mémoire cache (81) pour lesdites premières données d'image (25),
et **en ce que** les données sont extraites de ladite première et de ladite deuxième mémoire cache de manière synchrone.

39. Dispositif émetteur, **caractérisé en ce qu'**il comprend les composants suivants:
un récepteur pour recevoir des données contenant la direction du regard (22) d'au moins un utilisateur (9) transmise à travers un canal de retour,
un premier module de codage (3) pour comprimer des premières données d'image (25) avec une résolution réduite et pour les envoyer à travers un premier canal de transmission (4) en mode broadcast,
un deuxième module de codage (5) pour comprimer avec une plus haute résolution des deuxièmes données d'image (21, 24) correspondant à des portions d'image regardées actuellement ou ultérieurement par ledit au moins un utilisateur et pour les ènvoyer à travers un deuxième canal de transmission (7).

40. Dispositif selon la revendication précédente, **caractérisé en ce que** ladite portion d'image regardée (21) est la portion d'image projetée sur la fovéa de la rétine dudit utilisateur.

41. Dispositif selon la revendication 40, **caractérisé en ce que** la taille de ladite portion d'image (21) est adaptée.

42. Dispositif selon la revendication précédente, **caractérisé en ce que** la taille de ladite portion d'image (21) est adaptée à la largeur de bande dudit deuxième canal de transmission (7).

43. Dispositif selon l'une des revendications 39 à 42, **caractérisé en ce que** lesdites premières données d'image (25) sont envoyées en mode broadcast à travers ledit premier canal de transmission (4).

44. Dispositif selon l'une des revendications 39 à 43, **caractérisé en ce que** des données audio sont transmises à travers ledit premier canal de transmission (4) simultanément auxdites premières données d'image (25).

45. Dispositif selon l'une des revendications 39 à 44, **caractérisé en ce que** ledit deuxième canal de transmission (7) est bidirectionnel et **en ce que** ledit canal de retour est le canal de retour de ce deuxième canal de transmission (7).

46. Dispositif selon la revendication précédente, **caractérisé en ce que** ledit deuxième canal de transmission (7) comprend un réseau téléphonique public commuté.

47. Dispositif selon la revendication précédente, **caractérisé en ce que** ledit réseau téléphonique est un réseau radiomobile.

48. Dispositif selon l'une des revendications 39 à 47, **caractérisé en ce qu'**un centre de facturation (6) est prévu pour facturer audit utilisateur la restitution des images.

49. Dispositif selon l'une des revendications 39 à 48, **caractérisé en ce qu'**il comprend un module de segmentation (2) pour déterminer les portions d'image (21, 24, 25) qui doivent être transmises audit premier respectivement audit deuxième module de codage.

50. Dispositif selon l'une des revendications 39 à 49, **caractérisé en ce que** ledit deuxième module de codage (5) code et envoie en une fois à une pluralité d'utilisateurs (9) les données d'image correspondant à au moins une portion d'image regardée simultanément actuellement ou ultérieurement par ladite pluralité d'utilisateurs.

51. Dispositif selon l'une des revendications 39 à 50, **caractérisé en ce que** ladite direction du regard est déterminée à l'avance.

52. Dispositif selon l'une des revendications 39 à 51, **caractérisé en ce que** ladite direction du regard est prédéterminée en tenant compte du mouvement du point regardé.

53. Dispositif selon l'une des revendications 39 à 52, **caractérisé en ce que** ladite direction du regard est prédéterminée en tenant compte du mouvement de l'objet regardé sur lesdites données d'image.

54. Dispositif selon l'une des revendications 39 à 53, **caractérisé en ce que** ladite direction du regard est prédéterminée en tenant compte des portions marquées de l'image.
